# EUROPÄISCHE PATENTSCHRIFT

(11) **EP 2 887 510 B1**
(45) Veröffentlichungstag und Bekanntmachung des Hinweises auf die Patenterteilung: **02.12.2020**
(21) Anmeldenummer: 13199073.1
(22) Anmeldetag: 20.12.2013
(51) Int. Cl.: H02K 9/28, H02K 9/06

(54) **Elektrische Kontaktvorrichtung für eine elektrische Maschine**
Electrical contacting device for an electric machine
Dispositif de contact électrique pour une machine électrique

(43) Veröffentlichungstag der Anmeldung: 24.06.2015
(73) Patentinhaber: Siemens Aktiengesellschaft, 80333 München (DE)
(72) Erfinder: Binder, Herbert, 94127 Neuburg (DE); Memminger, Oliver, 94127 Neuburg a. Inn (DE); Schifferer, Klaus, 94127 Neuburg am Inn (DE); Vogel, Anatoli, 94032 Passau (DE)

(56) Entgegenhaltungen:
- EP-A1- 0 939 481
- DE-A1- 10 003 900
- DE-A1-102010 001 437
- US-A- 3 731 121
- US-A1- 2005 077 788

## Beschreibung

Die vorliegende Erfindung betrifft eine elektrische Kontaktvorrichtung für eine elektrische Maschine mit einer Bürsteneinrichtung, einer Schleifringeinrichtung, die zur Bürsteneinrichtung drehbar gelagert ist und die mit der Bürsteneinrichtung in elektrischem Kontakt steht, einem Lüfter zum Fördern eines Kühlmittels und ein Gehäuse, in dem die Bürsteneinrichtung, die Schleifringeinrichtung und der Lüfter angeordnet sind, wobei das Gehäuse eine Öffnung zum Einströmen eines Kühlmittels aufweist. Überdies betrifft die vorliegende Erfindung eine elektrische Maschine mit einer elektrischen Kontaktvorrichtung. Schließlich betrifft die vorliegende Erfindung eine Windkraftanlage mit einer derartigen elektrischen Maschine.

Windkraftanlagen beziehungsweise Windkraftgeneratoren umfassen eine elektrische Maschine, die als Generator betrieben wird. Als elektrische Maschine kann insbesondere eine doppelt gespeiste elektrische Maschine verwendet werden. Durch die Leistungssteigerung im Bereich der doppelt gespeisten Windkraftanlagen werden die eingesetzten Komponenten immer höheren Belastungen ausgesetzt. Um dem hohen Kostendruck gerecht zu werden, versucht man, die Leistungserhöhung mit baugleichen Komponenten zu realisieren und läuft damit Gefahr, dass im Bereich der Schleifringübertragung die Temperaturen das zulässige Maß übersteigen und die Betriebssicherheit nicht mehr gegeben ist.

Aus diesem Grund wird versucht, die Komponenten effektiver zu kühlen. Jedoch steigen hierdurch die Kosten bei der Fertigung der Windkraftanlage. Darüber hinaus werden bei steigenden Übertragungsströmen größere Schleifringanbauten verwendet. Beispielsweise werden die Schleifringe, die Bürstenbrücken und das Schleifringgehäuse entsprechend größer dimensioniert.

Diese Maßnahmen haben aber auch höhere Fertigungskosten zur Folge.

Um der Leistungssteigerung gerecht zu werden, hat man bisher versucht, die Übertragungssysteme, also die Schleifringe, die Bürstenbrücke und das Schleifringgehäuse, bezüglich ihrer Oberfläche so weit zu vergrößern, dass eine ausreichende Kühlung gegeben ist. Ein Radiallüfter wird üblicherweise ohne eine wesentliche Steuerung der Luftführung innerhalb des Schleifringgehäuses für das Ansaugen der nötigen Kühlluft von außen beziehungsweise aus dem Innenraum der Windkraftgondel verwendet.

Hierzu beschreibt die US 2005/0077788 A1 eine Schleifringeinrichtung zum Zuführen von elektrischer Energie zu einem Rotor einer elektrischen Maschine. Die Schleifringeinrichtung umfasst einen Schleifring, der eine zylindrische Außenfläche umfasst und der mit dem Rotor verbunden ist. Zudem ist eine Bürste vorgesehen, die mit dem Schleifring elektrisch verbunden ist. Über eine Öffnung in einem Gehäuse kann dem Schleifring ein Kühlmedium zugeführt werden.

Ferner beschreibt die DE 10 2010 001 437 A1 eine dynamoelektrische Maschine mit einem Schleifringläufer, dessen Schleifringanordnung auf der B-Seite der dynamoelektrischen Maschine angeordnet ist. Dabei wird jeweils ein geschlossener Primärluftkühlkreislauf für die dynamoelektrische Maschine als auch die Schleifringanordnung vorgesehen. Hierzu kann beispielsweise ein Radiallüfter vorgesehen sein. Zudem kann ein Sekundärkühler vorgesehen sein, der die Kühlmedien des Primärkühlkreislaufs der dynamoelektrischen Maschine und des Primärkühlkreislaufs der Schleifringanordnung kühlt.

Ferner beschreibt die EP 0 939 481 A1 eine Kühleinrichtung für eine elektrische Maschine, welche einen Schleifring aufweist. Dabei kann zumindest ein Element vorgesehen sein, mit dem zumindest ein erster Anteil eines Luftstroms, der von einem Lüfter bewirkt wird, zu dem Schleifring geführt werden. Eine weitere Kühleinrichtung ist in US 3731121 A offenbart.

Es ist Aufgabe der vorliegenden Erfindung, eine elektrische Kontaktvorrichtung für eine elektrische Maschine bereitzustellen, die effektiver betrieben werden kann.

Diese Aufgabe wird durch eine elektrische Kontaktvorrichtung mit den Merkmalen des Patentanspruchs 1 gelöst. Vorteilhafte Weiterbildungen der vorliegenden Erfindung sind Gegenstand der abhängigen Ansprüche.

Die erfindungsgemäße elektrische Kontaktvorrichtung für eine elektrische Maschine umfasst eine Bürsteneinrichtung, eine Schleifringeinrichtung, die zur Bürsteneinrichtung drehbar gelagert ist und die mit der Bürsteneinrichtung im elektrischen Kontakt steht, einen Lüfter zum Fördern eines Kühlmittels und ein Gehäuse, in dem die Bürsteneinrichtung, die Schleifringeinrichtung und der Lüfter angeordnet sind, wobei das Gehäuse eine Öffnung zum Einströmen des Kühlmittels aufweist und ein erstes Luftleitelement, das in dem Gehäuse derart angeordnet ist, dass dieses das durch die Öffnung einströmende Kühlmittel in einem Bereich, an dem die Bürsteneinrichtung und die Schleifringeinrichtung in elektrischem Kontakt stehen, leitet. Zudem umgibt das erste Luftleitelement die Schleifringeinrichtung entlang deren Umfangsrichtung vollständig.

Mittels der elektrischen Kontaktvorrichtung wird ein Schleifringkontakt hergestellt. Dieser kann beispielsweise in einer doppelt gespeisten elektrischen Maschine verwendet werden. Die elektrische Kontaktvorrichtung umfasst zumindest eine Bürsteneinrichtung, die wiederum zumindest eine Bürste aus elektrisch leitfähigem Material umfasst. Die zumindest eine Bürste kann in einem Bürstenhalter angeordnet sein. Mittels Federkraft kann die Bürste gegen die Schleifringeinrichtung, die zumindest einen Schleifring umfasst, gedrückt werden, wodurch eine elektrische Verbindung zwischen der Bürste und dem Schleifring hergestellt wird. Die Schleifringeinrichtung kann auf einer Welle drehfest angeordnet sein. Somit kann die Schleifringeinrichtung relativ zu der Bürsteneinrichtung gedreht werden.

Zum Kühlen der Schleifringeinrichtung und/oder der Bürsteneinrichtung ist in dem Gehäuse ein Lüfter angeordnet. Beispielsweise kann der Lüfter auf der Welle angeordnet sein und als Radiallüfter ausgebildet sein. Im Betrieb der elektrischen Kontaktvorrichtung wird durch den Lüfter ein Kühlmittel, insbesondere Kühlluft, vom Äußeren des Gehäuses durch die Öffnung des Gehäuses angesaugt. Das erwärmte Kühlmittel wird über eine weitere Öffnung in dem Gehäuse nach außen geführt. Vorliegend ist in dem Gehäuse ein erstes Luftleitelement vorgesehen. Dieses ist derart in dem Gehäuse angeordnet, dass das Kühlmittel in einen Bereich geleitet wird, in dem die Bürsteneinrichtung und die Schleifringeinrichtung in elektrischem Kontakt stehen. Somit kann das Kühlmittel beziehungsweise die kühle Umgebungsluft präzise an die benötigten Stellen der elektrischen Kontaktvorrichtung geführt werden. Das erste Luftleitelement kann beispielsweise als Luftführungswand oder als Schottwand ausgebildet sein. Die kühle Au-ßenluft wird durch den Wellenlüfter über die Kühlöffnung am Gehäuse angesaugt und direkt an die zu kühlenden Stellen geführt und kann somit nicht den direkten Weg zum Lüfter vorbei an dem zu kühlenden Bauteilen nehmen. Die Oberflächen der zu kühlenden Bauteile, also der Bürsteneinrichtung und der Schleifringeinrichtung, liegen somit direkt im Kühlmittelstrom.

Zudem umgibt das erste Luftleitelement die Schleifringeinrichtung entlang deren Umfangsrichtung vollständig. Somit können die Bürsteneinrichtung und die Schleifringeinrichtung gleichmäßig entlang der Umfangsrichtung der Schleifringeinrichtung gekühlt werden. Auf diese Weise kann die elektrische Kontaktvorrichtung effektiv betrieben werden.

Bevorzugt sind die Öffnung in dem Gehäuse auf einer ersten Seite des ersten Luftleitelements und der Lüfter auf einer der ersten gegenüberliegenden, zweiten Seite des ersten Luftleitelements angeordnet. Durch diese Anordnung kann bewirkt werden, dass der kühlende Luftstrom, der durch die Öffnung angesaugt wird, an die Bereiche der Bürsteneinrichtung und der Schleifringeinrichtung geleitet wird, die im Betrieb der elektrischen Kontaktvorrichtung erwärmt werden. Die Temperaturen der Schleifringlaufflächen und der Bürsten bleiben durch die Maßnahme in einem betriebsgerechten Temperaturbereich. Somit können die bisherigen Standardbaugruppen verwendet werden und die Fertigungskosten auf gleichem Niveau gehalten werden.

In einer weiteren Ausführungsform erstreckt sich das erste Luftleitelement entlang einer radialen Erstreckungsrichtung der Schleifringeinrichtung von der Schleifringeinrichtung zu dem Gehäuse. Das Gehäuse der elektrischen Kontaktvorrichtung kann eine zylinderförmige Form aufweisen. Das erste Luftleitelement kann in dem Gehäuse parallel zu den Seitenflächen des Gehäuses angeordnet sein. Beispielsweise kann das erste Luftleitelement zwischen den beiden Seitenflächen des Gehäuses mittig angeordnet sein. Das erste Luftleitelement kann an dem Gehäuse und/oder an der Schleifringeinrichtung befestigt sein. Somit kann ein einfach zu fertigendes erstes Luftleitelement bereitgestellt werden.

In einer Ausführungsform weist das erste Luftleitelement einen ersten Teil, der an der Schleifringeinrichtung angeordnet ist, und einen zweiten Teil, der an dem Gehäuse angeordnet ist, auf, wobei zwischen dem ersten Teil und dem zweiten Teil ein Spalt ausgebildet ist. Durch die zweiteilige Ausbildung des ersten Luftleitelements können Kriechströme entlang des Luftleitelements verhindert werden. Diese können beispielsweise infolge des Abriebs der Bürsten und Schleifringe im Inneren des Gehäuses entstehen. Darüber hinaus wird durch die zweiteilige Ausgestaltung des ersten Luftleitelements ein Luftspalt zwischen den beiden Teilen bereitgestellt, durch den der Kühlmittelstrom teilweise strömen kann. Durch die Dimensionierung des Spalts zwischen den beiden Teilen kann die Luftführung in dem Gehäuse auf einfache Weise angepasst werden.

In einer weiteren Ausgestaltung weist das erste Luftleitelement eine Durchtrittsöffnung auf. In dieser Ausführungsform kann das erste Luftleitelement direkt vor dem Lüfter angeordnet sein. Durch die Positionierung der Durchtrittsöffnung kann gesteuert werden, in welchem Bereich das Kühlmittel zu dem Lüfter gefördert wird. Somit kann der Kühlmittelstrom im Inneren des Gehäuses auf einfache Weise angepasst werden.

Bevorzugt ist die Durchtrittsöffnung in das erste Luftleitelement auf einer der Öffnung des Gehäuses gegenüberliegenden Seite der Schleifringeinrichtung eingebracht. Somit strömt die Luft, die durch die Öffnung des Gehäuses eindringt, entlang der Umfangsrichtung der Schleifringeinrichtung über die Schleifringeinrichtung bevor sie zu dem Lüfter strömt. Somit kann eine effektive Kühlung der Schleifringeinrichtung und/oder der Bürsteneinrichtung ermöglicht werden.

In einer weiteren Ausgestaltung ist in dem Gehäuse ein zweites Luftleitelement angeordnet, das sich im Wesentlichen senkrecht zu dem ersten Luftleitelement erstreckt. Durch das zweite Luftleitelement kann begünstigt werden, dass der Kühlmittelstrom zunächst über die Schleifringeinrichtung beziehungsweise die Bürsteneinrichtung geführt wird und anschließend in den Radiallüfter eintreten kann.

Bevorzugt ist das erste und/oder das zweite Luftleitelement aus einem elektrisch isolierenden Material gebildet. Da es sich bei den zu kühlenden Komponenten der elektrischen Kontaktvorrichtung um spannungsführende Elemente handelt, wird vorliegend ein isolierender Werkstoff für die Luftleitelemente verwendet. Zudem können durch die Luftleitelemente aus elektrisch isolierendem Material die erforderlichen Luft- und Kriechstrecken eingehalten werden.

Die erfindungsgemäße elektrische Maschine umfasst die erfindungsgemäße elektrische Kontaktvorrichtung. Die elektrische Maschine ist insbesondere eine doppelt gespeiste elektrische Maschine.

Die erfindungsgemäße Windkraftanlage umfasst die erfindungsgemäße elektrische Maschine. Dabei kann die elektrische Maschine insbesondere als Generator betrieben werden.

Die zuvor im Zusammenhang mit der erfindungsgemäßen elektrischen Kontaktvorrichtung beschriebenen Vorteile und Weiterbildungen gelten sinngemäß für die erfindungsgemäße elektrische Maschine und die erfindungsgemäße Windkraftanlage.

Die vorliegende Erfindung wird nun anhand der beigefügten Zeichnungen näher erläutert. Dabei zeigen:
- FIG 1: eine elektrische Kontaktvorrichtung für eine elektrische Maschine in einer geschnittenen Seitenansicht;
- FIG 2: die elektrische Kontaktvorrichtung gemäß FIG 1 in einer Perspektivansicht;
- FIG 3: die elektrische Kontaktvorrichtung in einer weiteren geschnittenen Seitenansicht;
- FIG 4: eine elektrische Kontaktvorrichtung gemäß einer weiteren Ausführungsform in einer geschnittenen Seitenansicht;
- FIG 5: die elektrische Kontaktvorrichtung gemäß FIG 4, wobei der Kühlmittelstrom in der elektrischen Kontaktvorrichtung verdeutlicht ist; und
- FIG 6: die elektrische Kontaktvorrichtung gemäß FIG 4 in einer geschnittenen Seitenansicht.

Die nachfolgend näher geschilderten Ausführungsbeispiele stellen bevorzugte Ausführungsformen der vorliegenden Erfindung dar.

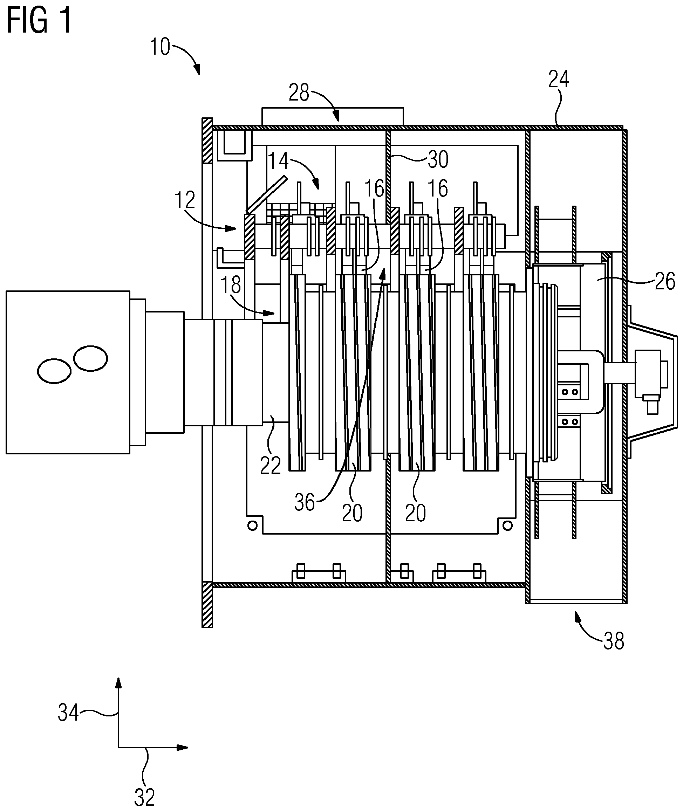

FIG 1 zeigt eine elektrische Kontaktvorrichtung 10 in einer geschnittenen Seitenansicht. Die elektrische Kontaktvorrichtung 10 umfasst eine Bürsteneinrichtung 12. Die Bürsteneinrichtung 12 umfasst einen Bürstenhalten 14, der mehrere Bürsten 16 trägt. Des Weiteren umfasst die elektrische Kontaktvorrichtung 10 eine Schleifringeinrichtung 18, die in dem vorliegenden Ausführungsbeispiel drei Schleifringe 20 umfasst. Die Schleifringeinrichtung 18 ist drehfest auf einer Welle 22 angeordnet. Somit kann die Schleifringeinrichtung 18 bezüglich der Bürsteneinrichtung 12 gedreht werden. Die Bürsten 16 der Bürsteneinrichtung 12 werden beispielsweise mittels Federkraft gegen die Schleifringe 20 gedrückt, wodurch die Bürsten 16 und die Schleifringe 20 in elektrischem Kontakt stehen. Eine derartige elektrische Kontaktvorrichtung 10 kann beispielsweise in einer doppelt gespeisten elektrischen Maschine verwendet werden.

Die elektrische Kontaktvorrichtung 10 umfasst ein Gehäuse 24, in dem die Bürsteneinrichtung 12 und die Schleifringeinrichtung 18 angeordnet sind. Darüber hinaus ist die Welle 22 teilweise in dem Gehäuse 24 angeordnet. In dem Gehäuse 24 der elektrischen Kontaktvorrichtung 10 ist darüber hinaus ein Lüfter 26 vorgesehen. Der Lüfter 26 kann als Radiallüfter ausgebildet sein, der auf der Welle 22 drehfest angeordnet ist. In das Gehäuse 24 ist eine Öffnung 28 eingebracht, die beispielsweise durch ein entsprechendes Gitter oder Netz abgedeckt sein kann. Im Betrieb des Lüfters 26 kann somit kühlende Umgebungsluft von außen durch die Öffnung 28 in das Gehäuse 24 der elektrischen Kontaktvorrichtung 10 befördert werden.

In dem Gehäuse 24 der elektrischen Kontaktvorrichtung 10 ist weiterhin ein erstes Luftleitelement 30 angeordnet. Das erste Luftleitelement 30 ist insbesondere aus einem elektrisch isolierenden Werkstoff gebildet. Das erste Luftleitelement 30 erstreckt sich im Wesentlichen entlang der radialen Richtung 34 der elektrischen Kontaktvorrichtung 10 beziehungsweise der Schleifringeinrichtung 18. Das erste Luftleitelement 30 erstreckt sich von der Schleifringeinrichtung 18 zu der Gehäusewand der elektrischen Kontaktvorrichtung 10. Durch das erste Luftleitelement 30 kann bewirkt werden, dass die über die Öffnung 28 eingesaugte Kühlluft in einen Bereich 36 geleitet, in dem die Schleifringeinrichtung 18 und die Bürsteneinrichtung 12 in elektrischem Kontakt stehen. Dieser Bereich 36 wird im Betrieb der elektrischen Kontaktvorrichtung 10 besonders stark erwärmt. Durch die Führung des Kühlmittelstroms durch das erste Luftleitelement 30 kann bewirkt werden, dass dieser Bereich 36 effektiv gekühlt wird.

Das erste Luftleitelement 30 erstreckt sich entlang der Umfangsrichtung der Schleifringeinrichtung 18 vollständig um die Schleifringeinrichtung 18. Somit kann erreicht werden, dass die Schleifringeinrichtung 18 und/oder die Bürsteneinrichtung 12 gleichmäßig gekühlt werden. Das erste Luftleitelement 30 kann sich vollständig von der Schleifringeinrichtung 18 zu dem Gehäuse 24 erstrecken. Das erste Luftleitelement 30 kann auch aus zwei Teilen ausgebildet sein, wobei ein erster Teil an der Schleifringeinrichtung 18 und ein zweiter Teil an dem Gehäuse 24 angeordnet ist. Darüber hinaus können der erste und der zweite Teil des ersten Luftleitelements 30 so ausgebildet sein, dass zwischen dem ersten und dem zweiten Teil ein Luftspalt ausbildet. Somit kann erreicht werden, dass ein Teil des Kühlmittelstroms durch den Luftspalt dringt. Auf diese Weise kann der Kühlmittelstrom innerhalb des Gehäuses 24 auf einfache Weise angepasst werden.

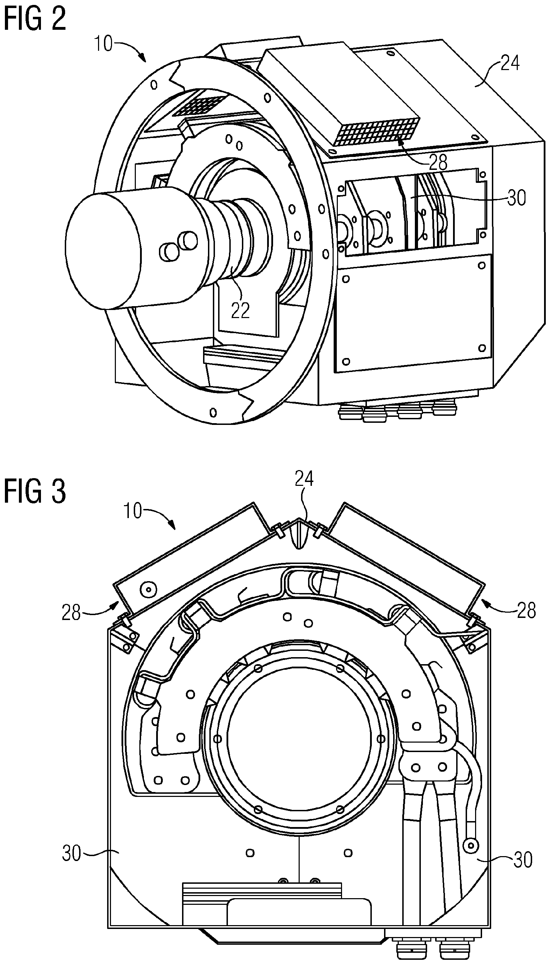

FIG 2 zeigt die elektrische Kontaktvorrichtung 10 gemäß FIG 1 in einer Perspektivansicht. Hierbei ist insbesondere die Öffnung 28 in dem Gehäuse 24 zu erkennen, die durch ein entsprechendes Gitter abgedeckt ist. Darüber hinaus ist die Anordnung des ersten Luftleitelements 30 ersichtlich, wobei das erste Luftleitelement 30 mittig in dem Gehäuse 24 angeordnet ist.

FIG 3 zeigt eine weitere geschnittene Seitenansicht der elektrischen Kontaktvorrichtung 10. Hierbei ist das erste Luftleitelement 30 in einer Draufsicht gezeigt. Das erste Luftleitelement 30 kann aus fertigungstechnischen Gründen aus mehreren Teilen zusammengesetzt sein und kann nach Art einer Schottwand ausgebildet sein.

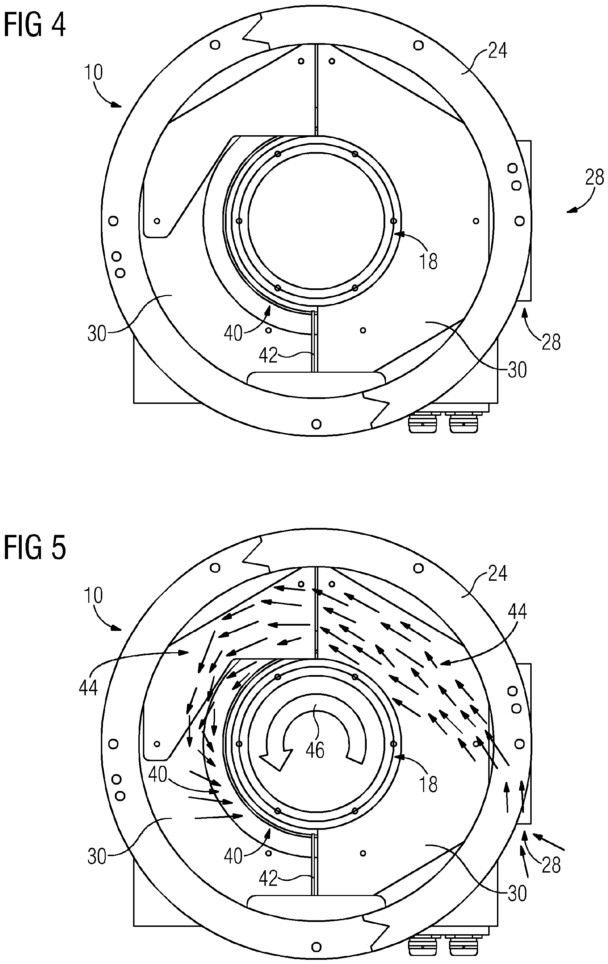

FIG 4 zeigt eine geschnittene Seitenansicht einer elektrischen Kontaktvorrichtung 10 in einer weiteren Ausführungsform. Im Vergleich zu der elektrischen Kontaktvorrichtung 10 gemäß den FIG 1 bis 3 erstreckt sich das erste Luftleitelement 30 bei dieser elektrischen Kontaktvorrichtung 10 nicht vollständig von der Schleifringeinrichtung 18 zu dem Gehäuse 24. Vorliegend weist das erste Luftleitelement 30 eine Durchtrittsöffnung 40 auf, durch die der Kühlmittelstrom strömen kann. Vorliegend ist die Durchtrittsöffnung auf einer der Öffnung 28 gegenüberliegenden Seite der Schleifringeinrichtung 18 angeordnet. Bei dieser Ausführungsform der elektrischen Kontaktvorrichtung 10 ist zudem ein zweites Luftleitelement 42 vorgesehen, das senkrecht zu dem ersten Luftleitelement 30 angeordnet ist. Durch das zweite Luftleitelement 42 wird das Kühlmittel entlang der axialen Richtung 32 der Schleifringeinrichtung 18 zu dem Lüfter 26 geleitet. Somit kann bewirkt werden, dass die Kühlluft, die durch die Öffnung 28 des Gehäuses 24 in das Gehäuse 24 einströmt, entlang der Umfangsrichtung um die Schleifringeinrichtung 18 geführt wird und anschließend in die Durchtrittsöffnung 40 eindringt. Der Kühlmittelstrom ist in FIG 5 durch die Pfeile 44 verdeutlicht. Der Drall, mit dem der Kühlmittelstrom beaufschlagt wird, wird zudem durch die Drehung der Schleifringeinrichtung 18 begünstigt, die vorliegend durch den Pfeil 46 verdeutlich ist. Durch die Anordnung des ersten und des zweiten Luftleitelements 30, 42 kann erreicht werden, dass die Schleifringeinrichtung 18 beziehungsweise die Bürsteneinrichtung 12 effektiv gekühlt wird.

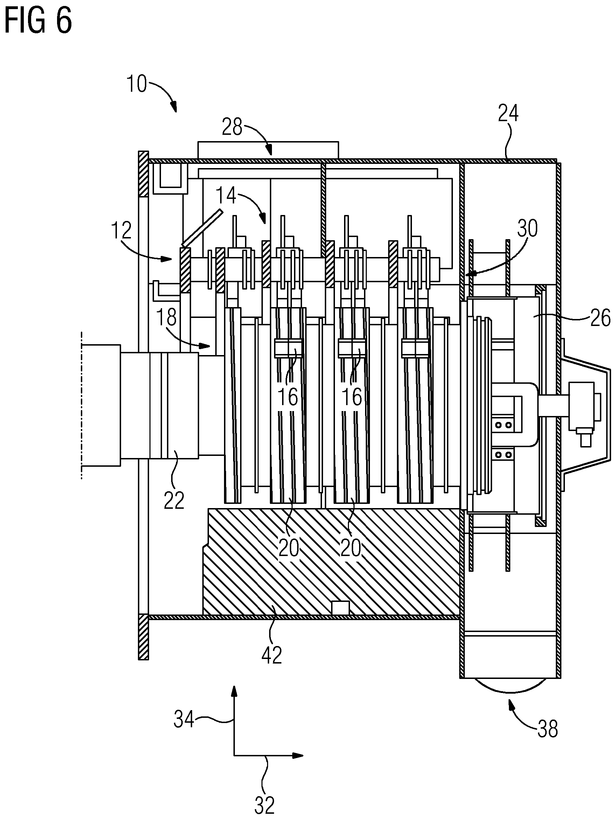

FIG 6 zeigt eine weitere geschnittene Seitenansicht der elektrischen Kontaktvorrichtung 10, in der insbesondere die Anordnung des zweiten Luftleitelements 42 dargestellt ist. Darüber hinaus ist ersichtlich, dass in diesem Ausführungsbeispiel das erste Luftleitelement 30 direkt vor dem Lüfter 26 angeordnet ist.

## Patentansprüche

1. Elektrische Kontaktvorrichtung (10) für eine elektrische Maschine mit
- einer Bürsteneinrichtung (12),
- einer Schleifringeinrichtung (18), die zur Bürsteneinrichtung (12) drehbar gelagert ist und die mit der Bürsteneinrichtung (12) in elektrischem Kontakt steht,
- einem Lüfter (26) zum Fördern eines Kühlmittels und
- einem Gehäuse (24), in dem die Bürsteneinrichtung (12), die Schleifringeinrichtung (18) und der Lüfter (26) angeordnet sind, wobei
- das Gehäuse (24) eine Öffnung (28) zum Einströmen des Kühlmittels aufweist und wobei
- ein erstes Luftleitelement (30), das in dem Gehäuse (24) derart angeordnet ist, dass dieses das durch die Öffnung (28) einströmende Kühlmittel in einen Bereich (36), an dem die Bürsteneinrichtung (12) und die Schleifringeinrichtung (18) in elektrischem Kontakt stehen, leitet,
**dadurch gekennzeichnet, dass**
- das erste Luftleitelement (30) die Schleifringeinrichtung (18) entlang deren Umfangsrichtung vollständig umgibt.

2. Elektrische Kontaktvorrichtung (10) nach Anspruch 1, wobei die Öffnung (28) in dem Gehäuse (24) auf einer ersten Seite des ersten Luftleitelements (30) und der Lüfter (26) auf einer der ersten Seite gegenüberliegenden, zweiten Seite des ersten Luftleitelements (30) angeordnet sind.

3. Elektrische Kontaktvorrichtung (10) nach einem der vorhergehenden Ansprüche, wobei sich das erste Luftleitelement (30) entlang einer radialen Erstreckungsrichtung (34) der Schleifringeinrichtung (18) von der Schleifringeinrichtung (18) zu dem Gehäuse (24) erstreckt.

4. Elektrische Kontaktvorrichtung (10) nach einem der vorhergehenden Ansprüche, wobei das erste Luftleitelement (30) einen ersten Teil, der an der Schleifringeinrichtung (18) angeordnet ist, und einen zweiten Teil, der an dem Gehäuse (24) angeordnet ist, aufweist, wobei zwischen dem ersten Teil und dem zweiten Teil ein Spalt ausgebildet ist.

5. Elektrische Kontaktvorrichtung (10) nach Anspruch 1 oder 2, wobei das erste Luftleitelement (30) eine Durchtrittsöffnung (40) aufweist.

6. Elektrische Kontaktvorrichtung (10) nach Anspruch 5, wobei die Durchtrittsöffnung (40) in das erste Luftleitelement (30) auf einer der Öffnung (28) des Gehäuses (24) gegenüberliegenden Seite der Schleifringeinrichtung (18) eingebracht ist.

7. Elektrische Kontaktvorrichtung (10) nach Anspruch 5 oder 6, wobei in dem Gehäuse (24) ein zweites Luftleitelement (42) angeordnet ist, das sich im Wesentlichen senkrecht zu dem ersten Luftleitelement (30) erstreckt.

8. Elektrische Kontaktvorrichtung (10) nach einem der vorhergehenden Ansprüche, wobei das erste und/oder das zweite Luftleitelement (30,42) aus einem elektrisch isolierenden Material gebildet ist.

9. Elektrische Maschine mit einer elektrischen Kontaktvorrichtung (10) nach einem der vorhergehenden Ansprüche.

10. Windkraftanlage mit einer elektrischen Maschine nach Anspruch 9.

## Claims

1. Electrical contacting device (10) for an electric machine having
- a brush device (12),
- a slip ring device (18) which is rotatably mounted in relation to the brush device (12) and which is in electrical contact with the brush device (12),
- a fan (26) for conveying a coolant and
- a housing (24) in which the brush device (12), the slip ring device (18) and the fan (26) are arranged, wherein
- the housing (24) has an opening (28) for the coolant to flow in and wherein
- a first air guide element (30) which is arranged in the housing (24) such that it guides the coolant flowing in through the opening (28) into an area (36) in which the brush device (12) and the slip ring device (18) are in electrical contact,
**characterised in that**
- the first air guide element (30) surrounds the slip ring device (18) along the latter's circumferential direction.

2. Electrical contacting device (10) according to claim 1, wherein the opening (28) in the housing (24) is arranged on a first side of the first air guide element (30) and the fan (26) is arranged on a second side of the first air guide element which is opposite the first side.

3. Electrical contacting device (10) according to one of the preceding claims, wherein the first air guide element (30) extends along a radial direction of extension (34) of the slip ring device (18) from the slip ring device (18) to the housing (24) .

4. Electrical contacting device (10) according to one of the preceding claims, wherein the first air guide element (30) has a first part, which is arranged on the slip ring device (18), and a second part, which is arranged on the housing (24), wherein a gap is formed between the first part and the second part.

5. Electrical contacting device (10) according to claim 1 or 2, wherein the first air guide element (30) has a passage opening (40).

6. Electrical contacting device (10) according to claim 5, wherein the passage opening (40) into the first air guide element (30) is introduced on a side of the slip ring device (18) opposite the opening (28) of the housing (24).

7. Electrical contacting device (10) according to claim 5 or 6, wherein a second air guide element (42) is arranged in the housing (24) and extends substantially perpendicular to the first air guide element (30).

8. Electrical contacting device (10) according to one of the preceding claims, wherein the first and/or the second air guide element (30, 42) is formed from an electrically insulating material.

9. Electric machine having an electrical contacting device (10) according to one of the preceding claims.

10. Wind turbine having an electric machine according to claim 9.

## Revendications

1. Système (10) de contact électrique d'une machine électrique, comprenant
- un dispositif (12) à balai,
- un dispositif (18) à bague collectrice, qui est monté tournant par rapport au dispositif (12) à balai et qui est en contact électrique avec le dispositif (12) à balai,
- un ventilateur (26) pour refouler un fluide réfrigérant et
- un boîtier (24), dans lequel sont disposés le dispositif (12) à balais, le dispositif (18) à bague collectrice et le ventilateur (26), dans lequel
- le boîtier (24) a une ouverture (28) pour l'entrée du fluide réfrigérant et dans lequel
- un premier élément (30) de conduite d'air, qui est monté dans le boîtier (24) de manière à conduire le fluide réfrigérant entrant par l'ouverture (28) à une région (36) où le dispositif (12) à balais et le dispositif (18) à bague collectrice sont en contact électrique,
**caractérisé en ce que**
- le premier élément (30) de conduite d'air entoure le dispositif (18) à bague collectrice complètement suivant la direction de pourtour de celui-ci.

2. Système (10) de contact électrique suivant la revendication 1, dans lequel l'ouverture (28) dans le boîtier (24) est disposée d'un premier côté de l'élément (30) de conduite d'air et le ventilateur (26) est disposé d'un deuxième côté, opposé au premier côté, du premier élément (30) de conduite d'air.

3. Système (10) de contact électrique suivant l'une des revendications précédentes, dans lequel le premier élément (30) de conduite d'air s'étend, suivant une direction (34) d'étendue radiale du dispositif (18) à bague collectrice, du dispositif (18) à bague collectrice au boîtier (24).

4. Système (10) de contact électrique suivant l'une des revendications précédentes, dans lequel le premier élément (30) de conduite d'air a une première partie, qui est montée sur le dispositif (18) à bague collectrice, et une deuxième partie, qui est montée sur le boîtier (24), un intervalle étant constitué entre la première partie et la deuxième partie.

5. Système (10) de contact électrique suivant la revendication 1 ou 2, dans lequel le premier élément (30) de conduite d'air a une ouverture (40) de passage.

6. Système (10) de contact électrique suivant la revendication 5, dans lequel l'ouverture (40) de passage du premier élément (30) de conduite d'air est ménagée d'un côté, opposé à l'ouverture (28) du boîtier (24), du dispositif (18) à bague collectrice.

7. Système (10) de contact électrique suivant la revendication 5 ou 6, dans lequel, dans le boîtier (24), est monté un deuxième élément (42) de conduite d'air, qui s'étend sensiblement perpendiculairement au premier élément (30) de conduite d'air.

8. Système (10) de contact électrique suivant l'une des revendications précédentes, dans lequel le premier et/ou le deuxième éléments (30, 42) de conduite d'air sont en un matériau isolant du point de vue électrique.

9. Machine électrique ayant un système (10) de contact électrique suivant l'une des revendications précédentes.

10. Eolienne ayant une machine électrique suivant la revendication 9.
